Europäisches Patentamt

European Patent Office

Office européen des brevets

(11) Publication number: 0 270 151
A1

## EUROPEAN PATENT APPLICATION

(21) Application number: 87202111.8

(22) Date of filing: 02.11.87

(51) Int. Cl.4: **C08K 3/22** , C08K 5/03 , C08L 77/06 , //(C08L77/06,25:18)

(30) Priority: 04.11.86 NL 8602791

(43) Date of publication of application:
08.06.88 Bulletin 88/23

(84) Designated Contracting States:
AT BE CH DE ES FR GB GR IT LI NL SE

(71) Applicant: STAMICARBON B.V.
Mijnweg 1
NL-6167 AC Geleen(NL)

(72) Inventor: Peerlkamp, Erik Rijkele
Klein Holtum 39
NL-6122 EG Born(NL)
Inventor: van de Wetering, Dingeman Huibert
Maasberg 6
NL-6181 GV Stein (L.)(NL)

(74) Representative: Hoogstraten, Willem Cornelis
Roeland et al
OCTROOIBUREAU DSM Postbus 9
NL-6160 MA Geleen(NL)

(54) Polyamide composition.

(57) The invention relates to an improved flame retardant composition of nylon 4.6 with halogenated polystyrene in which diantimony trioxide is present in a ratio between 7 : 1 and 2 : 1.

A further improvement of the flame retardant properties is obtained by including, as fourth component, 0.1-5 wt% of a substance which, by addition on account of its physical properties or by reacting with the polyamide, increases the viscosity of the melt.

EP 0 270 151 A1

## POLYAMIDE COMPOSITION

The invention relates to a flame retardant polyamide composition, more in particular to a polyamide composition consisting substantially of tetramethylene adipamide units, with improved processability and flame retardant properties.

Polyamide consisting substantially of tetramethylene adipamide units, hereinafter to be referred to as nylon 4.6, has superior mechanical properties and is therefore of importance as so-called 'engineering plastic'. However, the requirements in processing nylon 4.6 are high, because the melting point of abt. 290°C lies very close to the temperature at which nylon 4.6 starts to decompose, viz. 320-330°C. In addition, the melt viscosity within this applicable temperature range of 290 - abt. 320°C appears to depend strongly on the temperature. The processing temperature is also relatively high as compared with other commonly used polyamides. Because of this it is impossible to use many of the flame retardants that are effective in the case of, for example, nylon 6 and nylon 6.6. On account of this, only a limited number of compounds can be used. The use of brominated polystyrene as flame retardant for nylon 4.6 is described in JP-A-61-188463. Other halogenated styrene oligomer and polymer compounds also exhibit flame retardant properties. However, even high concentrations of these flame retardants appeared to only slightly improve the intrinsic flame retardant properties of nylon 4.6 within group V-2 to UL Standard 94. A brown, brittle product is obtained. The aim is now to find an improved flame retardant polyamide composition based on nylon 4.6 and halogenated polystyrene. In the UL Standard 94 tests, samples are ignited by heating with an open flame during a limited period of time and the burning time after removing the flame s measured. Non-dripping samples with limited burning time fall within group V-O. Dripping samples with limited burning time fall within group V-2.

The inventor has now found that by using diantimony trioxide as third component of the composition the effect achieved is considerably better than would be expected on the basis of the properties of the individual components. The requirement of group V-O of the flame propagation test is satisfied, which is impossible with diantimony trioxide or halogenated polystyrene alone.

The flame retardant polyamide composition based on polyamide consisting substantially of tetramethylene. adipamide units and halogenated polystyrene is characterized in that diantimony trioxide is used as third component.

The effective range is reached with the following composition:
a. 100 parts by weight of polytetramethylene adipamide
b. 20-40 parts by weight of halogenated polystyrene
c. 2-20 parts by weight of diantimony trioxide.

Preferably, 20-40 parts by weight of (b) and 4-20 parts by weight of (c) are used. The best results are obtained if the total amount of a + b amounts to 125 - 135 parts by weight and b and c are in a ratio between 7 : 1 and 2 : 1.

The improved effect of the brominated polystyrene caused by the presence of diantimony trioxide is probably explained by the fact that the presence of diantimony trioxide lowers the temperature at which the brominated polystyrene starts to decompose.

It is possible to add diantimony pentoxide, sodium antimonate, boron oxide, iron oxide, zirconium oxide, etc. instead of or in addition to diantimony trioxide. However, said substances are less effective than diantimony trioxide.

Because less flame retardant component need now be added, the mechanical properties of the composition are less adversely affected. The presence of diantimony trioxide even has a positive effect on the stiffness and impact resistance of compositions containing halogenated polystyrene.

It has further been found that the addition of a small amount of a substance which has a thickening effect on the polyamide melt can reduce problems regarding the processability and further improves the flame retardant properties so that, with respect to compositions con taining only a, b and c, the V-O requirements are satisfied at even lower concentrations. Substances of which small amounts may be added are substances whose physical properties increase the viscosity of the melt and substances which react with the polyamide present to thus increase the latter's viscosity in the melt.

This preferred composition of a flame retardant polyamide composition based on polyamide consisting substantially of tetramethylene adipamide units and halogenated polystyrene is therefore characterized in that, in addition to the third component diantimony (tri)oxide, it contains a fourth substance which, if added on account of its physical properties and/or by reacting with the polyamide, increases the viscosity of the melt.

Preferably, substances which are already effective in very small concentrations are used as fourth

2

component. Preferably the addition is limited to less than 5 parts by weight, more specifically to 0.1-5.0, and more advantageously to less than 3 parts by weight. Although by fullfilling the requirements of flame retardation concentrations higher than 5 parts by weight make injection molding of the compositions more difficult. Of course, such agents increasing the viscosity of the melt according to the invention do not include the thickening agents commonly applied by those skilled in the art, such as clay, talc and glass beads or fibres, which generally do not have a considerable effect on the viscosity unless they are added in high concentrations and which, because of this, in many cases affect the mechanical properties or the appearance of the articles produced from the melt obtained using such compositions.

As an example of a component which, on the basis of its physical properties, increases the melt viscosity a halogenated polyolefin is preferably used; halogenated polyolefins containing fluorine are particularly suitable. Preferably, 0.1-3.0 parts by weight of these materials are used.

Particularly effective components which, by reacting chemically with the polyamide, increase the melt viscosity are compounds capable of forming so-called crosslinks.

Examples of this type of compounds are epoxy compounds, diisocyanates, such as 1,6-hexanediisocyanate, if so desired with lactam end groups, or dialkyl carbonates and diphenyl carbonate. Particularly suitable are epoxy compounds containing two epoxy groups per molecule, such as epoxy-bisphenol, epoxy-novolak and aliphatic epoxy-type compounds. Of thes types of epoxy compounds diglycidyl polyethers obtained from the reaction of bisphenol A with epichlorohydrin, diglycidyl ethers obtained from the reaction of oligomers etc. such as monomer to decamer or glycols with epichlorohydrin, diglycidyl ester obtained from the reaction of aromatic dicarboxylic acids or aliphatic dicarboxylic acids with epichlorohydrin and similar compounds are preferably used. Epoxides with more than two active groups generally result in three-dimensional networks which adversely affect the flow of the melt and the appearance of the shapes. The amounts added of the above compounds are such that the melt viscosity is increased sufficiently to prevent dripping, but not such that the viscosity increases to such an extent as to require excessively high pressures in injection moulding or to result in insufficient filling of the mould. The amounts that may be used in practice are generally between 0.1 and abt. 3.0 parts by weight, based on 100 parts by weight of component (a) (polyamide).

The polyamide consisting substantially of tetramethylene adipamide units may also contain other monomer components which partly replace the tetramethylenediamine or adipic acid component. The copolyamide content is in principle unlimited, but must be less than 50%; in practice, however, not more than 30%; preferably less than 20%, is often used. Copolymers may be, for instance, amideforming compounds such as lactams, dicarboxylic acids and diamines, imide-forming compounds and ester-forming compounds, such as ethyl terephthalate and butyl terephthalate. The relative viscosity of the nylon 4.6 is preferably chosen between 2.0 and 5.0, but in special cases satisfactory results are also obtained with a nylon 4.6 with a lower or higher relative viscosity.

The halogenated polystyrene (component b) comprises the compounds that can be obtained by polymerization of halogenated styrene or α -methylstyrene or by halogenation of polystyrene or α -methyl polystyrene or oligomers. Copolymers with unhalogenated vinyl compounds may also be used.

Other components such as colourants, pigments, stabilizers, reinforcing fibres, agents improving the impact resistance, lubricants, antistatics and other polymers may also be added to the composition according to the invention. Other polymers are, for example, thermoplastic polymers such as polystyrene, acrylate, polyolefin, other polyamides, polycarbonate and polysulphone and thermosetting resins such as phenol resins, melamine, polyester, silicones, etc.

The composition according to the invention may be obtained in many different ways, which are in principle not limited and in which the order of mixing and homogenization of the different composite parts may vary in diverse manners, for example the mixing taking place in the solid phase and homogenization in the melt, or both treatments being effected in the melt, in different mixers or in the same appliance. It is also possible to suspend or dissolve one or more components of the composition in a solvent, to subsequently mix them with the other solid components, and then evaporate the solvent from the composition. Equipment or treatments that may be applied to this effect are, for example, blenders, kneaders, rolls and extruders. The composition of the invention is generally obtained in the form of granulate after extrusion following these treatments and is used, for example, for the production of shaped articles by means of injection moulding, etc. It is also possible to introduce a dry-mixed mixture of the components of the composition into the hopper of an injection moulding machine and to then directly produce shaped articles via melt kneading.

The invention will be further elucidated with the following examples and comparative examples.

The following methods were employed to determine the different characteristic quantities.

HDT: (1.8 MPa) according to ISO 75.

Flame propagation test: UL Standard 94, thickness of test piece 1.6 mm

Impact resistance: 'Izod notched' according to ASTM D 256 (tested dry) Relative viscosity: determined in a solution of 1.0 gram in 100 ml of 96 wt% $H_2SO_4$ at 25°C.

## Example 1

Nylon 4.6 powder (STANYLR produced by DSM, the Netherlands) with $\eta_{rel}$ = 3.3 is dried for at least 6 hours at reduced pressure (20 mm Hg) and subsequently premixed in dry condition with brominated polystyrene (Pyrochek 68 PB, produced by Ferro Corp. USA) or with a mixture of brominated polystyrene and diantimony trixoide powder. The powder mixtures thus obtained are immediately processed to form test plates in an Arburg Allrounder Type 221-55-250 injection moulding machine. The conditions applied for injection moulding are:

temperature of the polyamide: abt. 315°C

temperature of the mould: 80°C

residence time in the melt: 85-100 seconds

injection pressure: abt. 45 bar.

Table 1 presents the test results obtained with the different compositions.

## T A B L E   1

| nylon 4.6 (a) | Br. poly-styrene (b) | Sb$_2$O$_3$ (c) | IZOD impact resistance [kg cm/cm] | notes | HDT | flame propa-gation | burning time [seconds] 1st/2nd | |
|---|---|---|---|---|---|---|---|---|
| 100 parts | 0 | 0 | 9 | dripping | 176 | V-2 | 11/9 | (comp. example) |
| 100 | 25 | 0 | 3 | dripping | 156 | V-2 | 4/2 | (comp. example) |
| 100 | 40 | 0 | 3 | flamed appearance, dripping, very brittle | 156 | V-2 | -/- | (comp. example) |
| 100 | 20 | 4 | 4 | dripping | 159 | V-2 | 1/1 | (example) |
| 100 | 20 | 5 | 5 | | 160 | V-0 | 1/1 | (example) |
| 100 | 20 | 6 | 5 | | 162 | V-0 | 0/1 | (example) |
| 100 | 0 | 6 | 11 | dripping | 186 | V-2 | 27/17 | (comp. example) |

T A B L E   2

| a | b | c | d | flame propagation test | IZOD | notes |
|---|---|---|---|---|---|---|
| 100 | 20 | 4 | 0.5 A | V-0 | 7 | no dripping |
| 100 | 20 | 4 | 5.0 A | V-0 | 4 | incomplete filling of mould** |
| 100 | 20 | 5 | 1.5 A | V-0 | 7.5 | . |
| 100 | 16 | 5 | 1.0 B | V-0 | 7 | no dripping |
| 100 | 20 | 4 | 0.05 A | V-2 | 6 | dripping* |

\*   comparative example

\*\*  viscosity too high for injection molding

A = epoxy compound

B = PTFE

## Example 2

Amounts of agents increasing the melt viscosity, viz. A = a bisphenol A diglycidyl ether-type epoxide or B = polytetrafluoroethylene (Teflon® manufactured by Du Pont de Nemours) are added to mixtures of the polyamide (a), the brominated polystyrene (b) and antimony trioxide (c) of the previous example. These powder mixtures are also processed to form test pieces in the Arburg injection moulding machine. Table 2 presents the results obtained with the different compositions.

In the following place, the above experiments clearly show the synergistic effect of antimony trioxide on the flame retardant properties of the brominated polystyrene and the improved mechanical properties of the composition.

However, the specific combination of the composite parts listed as (b), (c) and (d) provides a fully satisfactory nylon 4.6 composition with good flame retardant properties.

## Claims

1. Flame retardant polyamide composition consisting substantially of tetramethylene adipamide units, containing halogenated polystyrene compound as flame retardant, characterized in that diantimony trioxide is present as third component.

2. Flame retardant polyamide composition according to claim 1, characterized in that the constituent compounds are present in the following composition by weight:
   a. 100 parts by weight of polyamide
   b. 2-40 parts by weight of halogenated polystyrene compound
   c. 2-20 parts by weight of diantimony trioxide.

3. Flame retardant polyamide composition according to claim 2, characterized in that the constituent compounds are present in the following composition by weight:
   a. 100 parts by weight of polyamide
   b. 20-40 parts by weight of halogenated polystyrene compound

c. 4-20 parts by weight of diantimony trioxide.

4. Flame retardant polyamide composition according to any one of the previous claims, characterized in that the total weight of (b + c) amounts to 20-40 parts by weight and b and c are in a ratio between 7 : 1 and 2 : 1.

5. Flame retardant polyamide composition according to any one of the previous claims, characterized in that it also contains a substance which, by addition of less than 5.0 parts by weight on account of its physical properties or by reacting with the polyamide, increases the viscosity of the melt of the polyamide composition.

6. Flame retardant polyamide composition according to claim 5, characterized in that it contains a substance which, by reacting with the polyamide, increases the viscosity of the melt of the polyamide composition.

7. Flame retardant polyamide composition according to claim 6, characterized in that it contains an epoxy compound with two epoxy groups per molecule.

8. Flame retardant polyamide composition according to claim 7, characterized in that the epoxy compound with two epoxy groups per molecule is chosen from the group of diglycidyl polyesters, diglycidyl esters and similar compounds.

9. Flame retardant polyamide compound according to any one of the previous claims, characterized in that the polyamide contains at least 70% tetramethylene adipamide units.

10. Shaped articles produced from the polyamide compositions according to any one of the previous claims.

Claims for the following contracting State: ES

1. Process for improving the flame retardancy of polyamide compositions containing halogenated polystyrene, characterized in that antimony trioxide is used.

2. Process for improving the flame retardancy of polyamide compositions according to claim 1, characterized in that a substance which, on account of its physical properties or by reacting with the polyamide, increases the viscosity of the melt is also added.

European Patent
Office

**EUROPEAN SEARCH REPORT**

Application Number

EP 87 20 2111

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y,D | CHEMICAL ABSTRACTS, vol. 105, no. 26, 1986, page 50, abstract no. 228024h, Columbus, Ohio, US; & JP-A-61 188 463 (ASAHI CHEMICAL INDUSTRY CO., LTD) 22-08-1986 --- | 1-4,9, 10 | C 08 K 3/22<br>C 08 K 5/03<br>C 08 L 77/06 //<br>(C 08 L 77/06<br>C 08 L 25:18 ) |
| Y | DE-B-2 703 419 (BASF)<br>* Claims 1-4 *<br>----- | 1-4,9, 10 | |

TECHNICAL FIELDS
SEARCHED (Int. Cl.4)

C 08 K
C 08 L

The present search report has been drawn up for all claims

| Place of search | Date of completion of the search | Examiner |
|---|---|---|
| THE HAGUE | 10-02-1988 | HOFFMANN K.W. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P0401)